# EUROPEAN PATENT APPLICATION

(11) **EP 4 664 986 A1**
(43) Date of publication of application: **17.12.2025**
(21) Application number: 25181931.4
(22) Date of filing: 11.06.2025
(51) Int. Cl.: H04W 28/02

(54) **USER DEFINED QUALITY OF EXPERIENCE**

(30) Priority: 12.06.2024 US 202418741200
(71) Applicant: T MOBILE INNOVATIONS LLC, Overland Park KS 66251-2100 (US)
(72) Inventor: NIMBAVIKAR, Gunjan, Sammamish, 98075 (US)
(74) Representative: Suddaby, Mark Edward

(57) **Abstract**

Methods and systems provided herein allow user prioritization of applications, services, and devices in order to enhance user quality of experience (QoE). A wireless device user exercises one or more customization options allowing manipulation of a default prioritization scheme. A customized prioritization scheme for the wireless device user is configured based on the manipulation.

## Description

This application claims priority to U.S. Patent Application No. 18/741,200, filed on June 12, 2024, the entire contents of which is incorporated by reference herein.

### TECHNICAL BACKGROUND

As wireless networks evolve and grow, challenges arise in providing a satisfactory quality of experience (QoE) for all network users. Typically, network administrators utilize a set of rules to prioritize traffic within a network. The network administrators chooses certain types of data or devices to prioritize and provide maximum speeds, while slowing down other types of data or devices. For example, the network settings may prioritize high-demand activities like online gaming and video while slowing down traditional website performance. However, these network administrators often lack sufficient information to select and implement these rules for the benefit of all network users.

Different classes of devices and user preferences create further complications. For example, wireless devices may include 5G enhanced mobile broadband (eMBB) devices, internet of things (IoT) devices, and reduced capability (RedCap) devices. Further, these various types of devices may utilize different applications and services, such as for example, gaming applications, online meeting applications such as WebEx, virtual reality (VR) applications, augmented reality (AR) applications, or streaming applications, messaging applications, cloud services, file transfer applications, social media applications, monitoring applications, or security applications. These applications and devices may be variously utilized by different network users. Accordingly, solutions are needed for ensuring that each user has access to a sufficient QoE.

### OVERVIEW

Exemplary embodiments provided herein include a method for providing a user-defined QoE. In some embodiments, the method includes setting a default prioritization scheme for applications or services utilized by multiple wireless devices in a wireless network and providing an override option or customization option allowing manipulation of the default prioritization scheme, the customization option available through a wireless device interface. The method further comprises overriding the default prioritization scheme to provide a customized prioritization scheme for a wireless device based on manipulation of the customization option through the wireless device interface.

Further aspects include a system for providing a user-defined QoE. The system includes at least one memory storing instructions and data, including a default prioritization scheme for applications and services utilized by multiple wireless devices in a wireless network. The system additionally includes at least one processor executing the instructions to perform multiple operations. The operations include providing an override option or a customization option allowing manipulation of the default prioritization scheme, the override option or customization option available through a wireless device interface. The operations additionally include overriding the default prioritization scheme to provide a customized prioritization scheme for a wireless device based on manipulation of the customization option through the wireless device interface.

Yet further aspects include a wireless device providing for a user-defined QoE. The wireless devices includes at least one processor executing services and applications in accordance with a customized prioritization scheme. The wireless device further includes a user interface allowing configuration of the customized prioritization scheme. The processor is programmed to execute the services and applications in accordance with the customized prioritization scheme through the user interface of the wireless device.

### BRIEF DESCRIPTION OF THE DRAWINGS

FIG. 1 depicts an exemplary environment for providing a user-defined QoE in accordance with an embodiment.
FIG. 2 depicts an exemplary QoE prioritization system in accordance with an embodiment.
FIG. 3 depicts an exemplary wireless device in accordance with an embodiment.
FIG. 4 depicts an exemplary method for providing user-defined QoE in accordance with an embodiment.
FIG. 5 depicts a further exemplary method for providing a customization option for a user-defined QoE in accordance with an embodiment.
FIG. 6 depicts a further method for providing a customization option for a user-defined QoE in accordance with an embodiment.

### DETAILED DESCRIPTION

Embodiments provided herein include a method for providing user-controller quality of experience (QoE). Currently, traffic prioritization is typically configured by wireless network providers or by applications or associated network nodes. With the advent of IoT devices around the home and the increasing number of data hungry applications such as gaming, augmented reality (AR), virtual reality (VR), and streaming, traditional QoE control methods fail to address user needs and preferences at any given moment. Accordingly, embodiments provided herein allow for user customization of traffic prioritization to enhance the user QoE.

Embodiments provided herein allow users to tag one or more applications, services, or devices as a highest priority based on individual usage rather than on a pre-defined network setting. For example, with embodiments provided herein, users can prioritize work-related traffic during the day-time hours when other household members are playing games. During the nighttime hours, users can prioritize security camera systems over all other traffic such as streaming or AR/VR. Further, users can prioritize applications or devices based on their current location. For example, in the workplace, different priorities may bet set than in a residence. While traveling, a user may set different priorities than at the residence of the user.

Accordingly, embodiments set forth herein allow the user at any given time to decide which application, service, or device should be prioritized. Embodiments provided herein allow users to override a system default prioritization scheme configured for multiple wireless devices in a network. Users are provided with an override option allowing manipulation of the default prioritization scheme. The override option may be available, for example, through a wireless device interface associated with a mobile application or alternatively a network provider website. Methods provided herein adjust the default prioritization scheme to a custom prioritization scheme based on manipulation of the provided customized options through the wireless device interface.

In some embodiments, the default prioritization scheme may be stored at a network node, for example, at an access node serving multiple wireless devices. Further, the customized prioritization scheme may be configured at a wireless device and communicated from the wireless device to the network node. A system for providing a customized prioritization scheme may be a discrete system or may be a distributed system having components located at the wireless device or at one or more network nodes.

In embodiments provided herein, a wireless device may control multiple other wireless devices, such as IoT devices or devices in a smart home environment. For example, security systems, thermostats, appliances, laptop computers, desktop computers, and audio/video equipment such as televisions or gaming equipment may all have priorities that can be controlled by a wireless device. In embodiments provided herein, the wireless device user may configure priorities for these controlled devices at any given time. Further, the wireless device may configure priorities for applications or services provided on any controlled device.

Systems and methods disclosed herein include a scheduling option allowing time-based customized prioritization. Further, systems and methods disclosed herein provide for a location based prioritization option through the wireless device interface. In some embodiments, the customization may be achieved through a mobile application running on the wireless device and provided by the network service provider. In other configurations, the network service provider may provide a website offering customization options. Further, different customization options may be provided through the mobile application or service provider website for Wi-Fi and for cellular connectivity environments.

An exemplary environment described herein includes at least an access node (or base station), such as a next generation NodeB (gNodeB), and a plurality of end-user wireless devices. For illustrative purposes and simplicity, the disclosed technology will be illustrated and discussed as being implemented in the communications between an access node (e.g., a base station) and a wireless device (e.g., an end-user wireless device).

In addition to the systems and methods described herein, the operations for creating a user defined QoE may be implemented as computer-readable instructions or methods and processing nodes on the network for executing the instructions or methods. The processing node may include a processor included in the access node or a processor included in any controller node in the wireless network that is coupled to the access node.

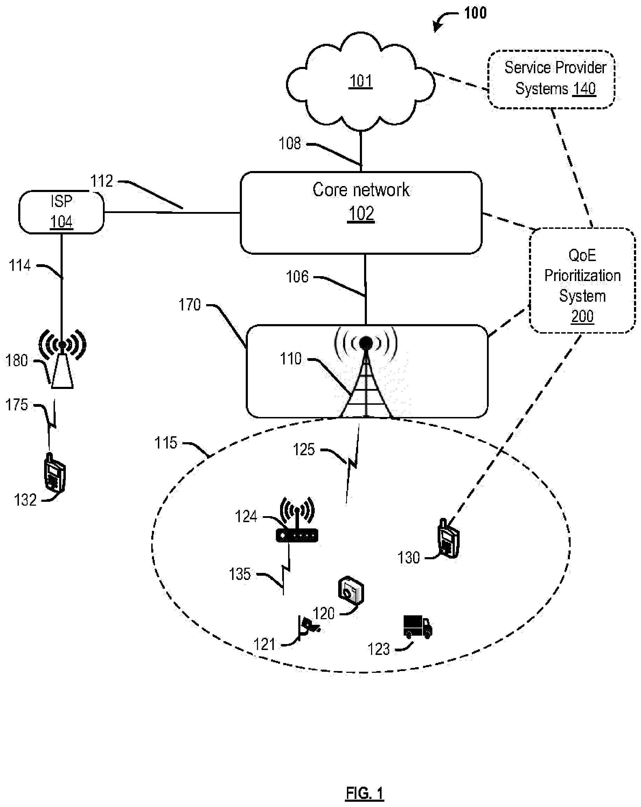

FIG. 1 depicts an exemplary environment 100 for implementing a user-defined QoE in a wireless network. In the displayed environment 100, a QoE prioritization system 200 operates to assign priorities for wireless devices 120, 121, 123, 130 within a coverage area 115. These wireless devices may be, for example, eMBB devices, IoT devices, or any other type of wireless device capable of connecting with a wireless network. In examples provided herein, the wireless device 130 may be a controlling wireless device that controls wireless devices 120, 121, and 123

Environment 100 comprises a communication network 101, core network 102, and a radio access network (RAN) 170 including at least an access node 110. Wireless devices 120, 121, 123, and 130 communicate with the access node 110. Further, the access node may communicate with a wireless access point 124, which communicates by a wireless link 135 with the wireless devices 120, 121, 123, and 130. Further, a QoE prioritization system 200 operates to enable user control of QoE. Additionally, the wireless devices 120, 121, 123, 130, and 132 may access the communication network 101 through a router or wireless access point 180 using a communication link 175 and Internet service provider (ISP) 104.

The exemplary operating environment 100 may further include service provider systems 140, which are accessible over the communication network 101 and are connected to the communication network 101 in any known manner. The service provider systems 140 may include, for example, a service provider website that allows adjustments to the user QoE from the wireless devices 120, 121, 123, 130, and 132. Additional service provider systems may also be included. Additionally, components not shown may include, for example, gateway node(s) controller nodes, and additional access nodes.

For example, a wireless network may include one or more access nodes, such as base stations including evolved NodeBs (eNBs) or next generation NodeBs (gNBs) for providing wireless voice and data service to wireless devices in various coverage areas of the one or more access nodes. As wireless technology continues to improve, various different iterations of radio access technologies (RATs) may be deployed within a single wireless network. Such heterogeneous wireless networks can include newer 5G and millimeter wave (mm-wave) networks, as well as 6G or 4G long-term evolution (LTE) access nodes.

Access node 110 can be any network node configured to provide communication between end-user wireless devices 120, 121, 123, and 130 and communication network 101, including standard access nodes and/or short range, low power, small access nodes. For instance, access node 110 may include any standard access node, such as a macrocell access node, base transceiver station, a radio base station, an eNodeB device, an enhanced eNodeB device, a next generation NodeB device (gNBs) in 5G networks, or the like.

Further the access node 110 may include multiple co-located access nodes, such as a combination of eNodeBs and gNodeBs. Access node 110 can be a small access node including a microcell access node, a picocell access node, a femtocell access node, or the like such as a home NodeB or a home eNodeB device. Moreover, it is noted that while access node 110 and wireless devices 120, 121, 123, 130, and 132 are illustrated in FIG. 1, any number of access nodes and wireless devices can be implemented within environment 100.

The exemplary operating environment 100 may further include QoE prioritization system 200, which is illustrated as operating between the communication network 101, core network 102, the RAN 170, and the wireless devices 120, 121, 123, and 130. Thus, the QoE prioritization system 200 may be distributed. For example, the QoE prioritization system 200 may utilize components located at any one or more of the above-described locations. Alternatively, the QoE prioritization system 200 may be an entirely discrete system operating in conjunction with the communication network 101, the RAN 170, core 102 and/or the wireless devices 120, 121, 123, 130, 131, 133.

The QoE prioritization system 200 receives information pertaining to wireless devices from wireless devices 120, 121, 123, 130, 132. For example, the QoE prioritization system 200 may collect prioritization preferences from the wireless devices 120, 121, 123, 130, and 132. In embodiments set forth herein, the wireless devices 120, 121, 123, 130, and 132 may send these parameters to the access nodes 110, which convey relevant parameters to the QoE prioritization system 200. As an alternative, the wireless devices 120, 121, 123, 130, and 132 may access the service provider system 140 such as a service provider website to set priorities for application, devices and/or services. The QoE prioritization system 200 processes this information in order to customize priorities for each requesting wireless device 120, 121, 123, 130, and 132. For example, the QoE prioritization system 200 may be configured to execute methods including providing an override option allowing manipulation of the system pre-set default prioritization scheme. The default prioritization scheme may be stored, for example, at the access node 110, the system 200, and or the wireless devices 130, 132. The override option or customization option may be available through a wireless device interface and may override the default prioritization scheme and providing a customized prioritization scheme for a requesting wireless device, such wireless device 130 or 132, based on manipulation of the default prioritization scheme through the wireless device interface.

Access node 110 can comprise a processor and associated circuitry to execute or direct the execution of computer-readable instructions to perform operations such as those further described herein. Briefly, access node 110 can retrieve and execute software from storage, which can include a disk drive, a flash drive, memory circuitry, or some other memory device, and which can be local or remotely accessible. The software comprises computer programs, firmware, or some other form of machine-readable instructions, and may include an operating system, utilities, drivers, network interfaces, applications, or some other type of software, including combinations thereof. Further, access node 110 can receive instructions and other input at a user interface. Access node 110 is capable of communicating with the core network 102 as well as various additional nodes including gateway nodes, controller nodes, and other access nodes.

Further, the access node 110 may communicate with the QoE prioritization system 200 or alternatively may wholly or partially incorporate the QoE prioritization system 200. Thus, the QoE prioritization system 200 may collect data from the wireless devices 120, 121, 123, 130, and 132 and may perform processing in order to trigger traffic prioritization at the access node 110.

Wireless devices 120, 121, 123, 130, and 132 may be any device, system, combination of devices, or other such communication platform capable of communicating wirelessly with access node 110 using one or more frequency bands deployed therefrom. For example, the wireless devices 120, 121, 123 may include IoT devices that build a network of physical objects or things that are embedded with sensors, software, and other technologies for the purpose of connecting and exchanging data with other devices and systems over the Internet or communication network 101. Cellular IoT connects physical things, such as sensors to the Internet by having them utilize the same mobile networks as wireless devices. IoT technology can be utilized to equip the "smart home", including devices such as lighting fixtures, thermostats, home security systems and cameras. The devices can often be controlled using smartphones, such as wireless devices 130 and 132. Further, businesses, such as utility companies utilize industrial wireless sensors for reporting usage parameters and performing other necessary tasks. With either smart home or business applications, IoT devices 120, 121, and 123 can be controlled by other wireless devices 130, 132, which may be smart phones, laptop computers, tablets, etc. Subsequent to sending preferences to the access node 110, for example, through a mobile application or a service provider system 140, priorities requested by the wireless devices 130, 132, may be implemented.

Wireless devices 130 and 132 may be, for example, eMBB devices. The wireless devices 130, 132 may be or include, for example, a mobile phone, a wireless phone, a wireless modem, a personal digital assistant (PDA), a voice over internet protocol (VoIP) phone, a voice over packet (VOP) phone, a soft phone, a home internet (HINT) device, a fixed wireless access (FWA) device as well as other types of devices or systems that can exchange audio or data via access node 110.

The core network 102 includes core network functions and elements. The core network may be structured using a service-based architecture (SBA). The network functions and elements may be separated into user plane functions and control plane functions. In an SBA architecture, service-based interfaces may be utilized between control-plane functions, while user-plane functions connect over point-to-point link. The user plane function (UPF) accesses a data network, such as network 101, and performs operations such as packet routing and forwarding, packet inspection, policy enforcement for the user plane, quality of service (QoS) handling, etc. The control plane functions may include, for example, a network slice selection function (NSSF), a network exposure function (NEF), a network repository function (NRF), a policy control function (PCF), a unified data management (UDM) function, an application function (AF), an access and mobility function (AMF), an authentication server function (AUSF), and a session management function (SMF). Additional or fewer control plane functions may also be included. The AMF receives connection and session related information from the wireless devices 120, 121, 123, 130, and 132 and is responsible for handling connection and mobility management tasks. The SMF is primarily responsible for creating, updating, and removing sessions and managing session context. The UDM function provides services to other core functions, such as the AMF, SMF, and NEF. The UDM function may function as a stateful message store, holding information in local memory. The NSSF can be used by the AMF to assist with the selection of network slice instances that will serve a particular device. Further, the NEF provides a mechanism for securely exposing services and features of the core network.

Communication network 101 can be a wired and/or wireless communication network, and can comprise processing nodes, routers, gateways, and physical and/or wireless data links for carrying data among various network elements, including combinations thereof, and can include a local area network a wide area network, and an internetwork (including the Internet). Communication network 101 can be capable of carrying data, for example, to support voice, push-to-talk, broadcast video, and data communications by wireless devices 120, 121, 123, 130, and 132 etc. Wireless network protocols can comprise multimedia broadcast multicast service (MBMS), code division multiple access (CDMA) 1xRTT, Global System for Mobile communications (GSM), Universal Mobile Telecommunications System (UMTS), High-Speed Packet Access (HSPA), Evolution Data Optimized (EV-DO), EV-DO rev. A, Third Generation Partnership Project Long Term Evolution (3GPP LTE), and Worldwide Interoperability for Microwave Access (WiMAX), Fourth Generation broadband cellular (4G, LTE Advanced, etc.), and Fifth Generation mobile networks or wireless systems (5G, 5G New Radio ("5G NR"), or 5G LTE). Wired network protocols that may be utilized by communication network 101 comprise Ethernet, Fast Ethernet, Gigabit Ethernet, Local Talk (such as Carrier Sense Multiple Access with Collision Avoidance), Token Ring, Fiber Distributed Data Interface (FDDI), and Asynchronous Transfer Mode (ATM). Communication network 101 can also comprise additional base stations, controller nodes, telephony switches, internet routers, network gateways, computer systems, communication links, or some other type of communication equipment, and combinations thereof.

Communication links 106, 108, 112, and 114 can use various communication media, such as air, space, metal, optical fiber, or some other signal propagation path, including combinations thereof. Communication links 106, 108, 112, and 114 can be wired or wireless and use various communication protocols such as Internet, Internet protocol (IP), local-area network (LAN), optical networking, hybrid fiber coax (HFC), telephony, T1, or some other communication format. Communication links 106, 108, 112, and 114 can be a direct link or might include various equipment, intermediate components, systems, and networks. Communication links 106, 108, 112, and 114 may comprise many different signals sharing the same link.

Other network elements may be present in environment 100 to facilitate communication but are omitted for clarity, such as base stations, base station controllers, mobile switching centers, dispatch application processors, and location registers such as a home location register or visitor location register. Furthermore, other network elements that are omitted for clarity may be present to facilitate communication, such as additional processing nodes, routers, gateways, and physical and/or wireless data links for carrying data among the various network elements, e.g. between access node 110 and communication network 101.

Further, the methods, systems, devices, networks, access nodes, and equipment described above may be implemented with, contain, or be executed by one or more computer systems and/or processing nodes. The methods described above may also be stored on a non-transitory computer readable medium. Many of the elements of communication environment 100 may be, comprise, or include computers systems and/or processing nodes.

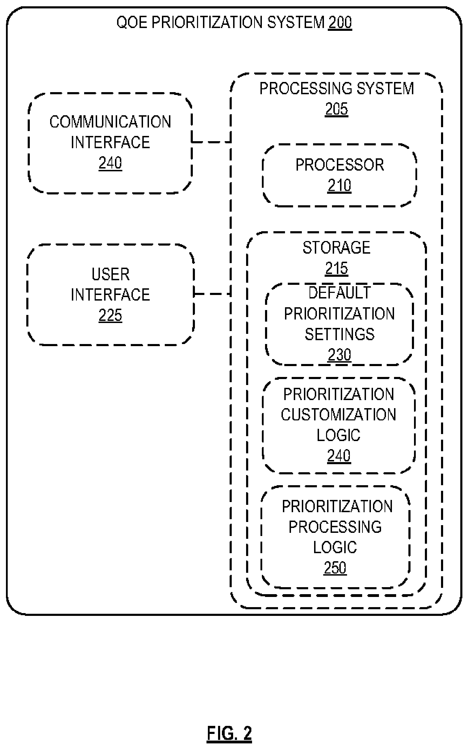

FIG. 2 illustrates a QoE prioritization system 200 in accordance with embodiments described herein. The components described herein are merely exemplary as many different configurations for the QoE prioritization system 200 may be implemented. The QoE prioritization system 200 may be configured to perform the methods and operations disclosed herein to implement a user-controlled QoE. In the disclosed embodiments, the QoE prioritization system 200 may be integrated with each access node 110, integrated with the wireless devices 120, 121, 123, 130, and 132, integrated with the core network 102 or may include an entirely separate component capable of communicating with at least the wireless devices 120, 121, 123, 130, and 132, the RAN 170, and the communication network 101. Further, the components of the QoE prioritization system 200 may be distributed so that one or more components is located at an access node 110 and one or more other components are located within a separate processing node and/or at the wireless devices 120, 121, 123, 130, and/or 132.

The QoE prioritization system 200 may be configured for collecting data transmitted by the wireless devices 120, 121, 123, 130, and/or 132 to the access nodes 110 or to the service provider system 140 through the ISP 104. To perform processes for QoE prioritization, the QoE prioritization system 200 may utilize a processing system 205. Processing system 205 may include a processor 210 and a storage device 215. Storage device 215 may include a RAM, ROM, disk drive, a flash drive, a memory, or other storage device configured to store data and/or computer readable instructions or codes (e.g., software). The computer executable instructions or codes may be accessed and executed by processor 210 to perform various methods disclosed herein.

Software stored in storage device 215 may include computer programs, firmware, or other form of machine-readable instructions, including an operating system, utilities, drivers, network interfaces, applications, or other type of software. For example, software stored in storage device 215 may include a module for performing various operations described herein. For example, in some embodiments, default prioritization settings 230 may include default settings for prioritization of applications, services, and/or devices. The default settings 230 need not be present in all embodiments. Prioritization customization logic 240 may store instructions for providing users with the opportunity to customize prioritization. The prioritization customization logic 240 may provide a customization interface to wireless device users by various mechanisms. For example, the prioritization customization logic 240 may provide a mobile application downloadable to wireless devices to provide the wireless device users with a customization option. Alternatively prioritization customization logic may interact with the service provider system 140 to provide a website accessible to wireless device users. Through the website, the service provider system 140 offers a customization option to the wireless device users enabling prioritization of services, applications, and/or devices. Finally, prioritization processing logic 250 may be utilized to ensure that the wireless devices receive the benefit of selected customization options. For example, the prioritization processing logic 250 may receive the customized settings and ensure that the access nodes 110 of the RAN 170 operate in accordance with the customized settings and override any network pre-set default priorities.

Processor 210 may be a microprocessor and may include hardware circuitry and/or embedded codes configured to retrieve and execute software stored in storage device 215. The QoE prioritization system 200 further includes a communication interface 220 and a user interface 225. Communication interface 220 may be configured to enable the processing system 205 to communicate with other components, nodes, or devices in the wireless network. For example, the QoE prioritization system 200 receives relevant parameters from the access node 110 or from the wireless devices 120, 121, 123, 130, and 132, and/or the service provider system 140.

Communication interface 220 may include hardware components, such as network communication ports, devices, routers, wires, antenna, transceivers, etc. User interface 225 may be configured to allow a user to provide input to the QoE prioritization system 200 and receive data or information from access nodes 110, service provider system 140 and/or the wireless devices 120, 121, 123, 130, and 132. User interface 225 may include hardware components, such as touch screens, buttons, displays, speakers, etc. The QoE prioritization system 200 may further include other components such as a power management unit, a control interface unit, etc.

The location of the QoE prioritization system 200 may depend upon the network architecture. As set forth above, the QoE prioritization system 200 may be located in an access node 110, in a separate processing node, in the RAN 170, in multiple locations, or may be an entirely discrete component. Further, although shown as a single integrated system, the functions of storing default settings, prioritization customization, and prioritization processing may be separated and disposed in separate locations.

Accordingly, the system 200 includes a memory 215 storing instructions and data. The data includes default prioritization settings 230 for applications and services utilized by multiple wireless devices in a wireless network. The system further includes at least one processor 210 executing the stored instructions including prioritization customization logic 240 and prioritization processing logic 250. The prioritization customization logic 240 provides a customization or override option allowing manipulation of the default prioritization settings 230. The override option or customization option may be available through a wireless device interface delivered through a service provider website or a mobile application supplied by the service provider or on behalf of the service provider. Further, the override option includes both W-Fi and cellular override options. The Wi-Fi override option may include prioritization based on selection of Wi-Fi multimedia (WMM), uplink quality of service (QOS), and low latency, low loss, and scalable throughput (L4S). The cellular override option may include prioritization based on 5G quality of service (QoS) Identifier (5QI), low latency, low loss, and scalable throughput (L4S), and/or on-demand network slicing.

The prioritization processing logic 250 adjusts the default prioritization settings and provides a customized prioritization scheme for a wireless device based on manipulation of the default prioritization scheme or entry of the customized priority scheme through the wireless device interface. The prioritization processing logic 250 may trigger a message to an access node 110 to ensure that the requesting wireless device receives the customized priority requested.

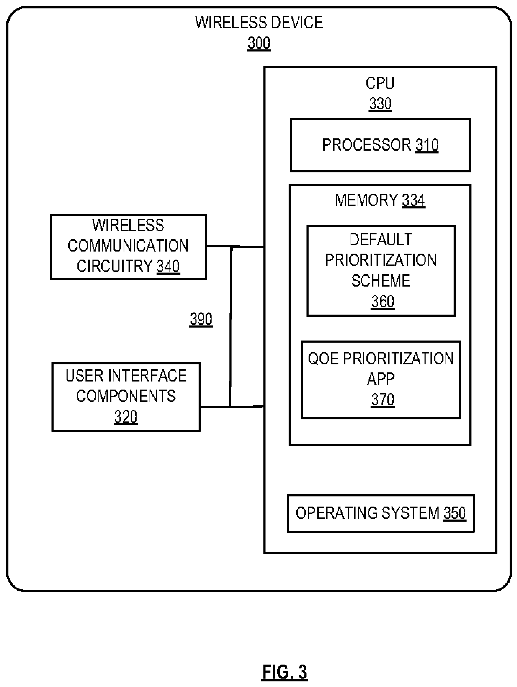

FIG. 3 depicts a wireless device 300 in accordance with disclosed embodiments. The wireless device 300 may correspond to, or be a representation of the wireless devices 120, 121, 123, 130, and 132 as shown in FIG. 1. As illustrated, the wireless device 300 includes wireless communication circuitry 340, user interface components 320, a central processing unit (CPU) 330, processor 310, memory 334, and operating system 350. Components may be connected, for example, by a bus 390. These components are merely exemplary and the wireless device 300 may include a larger or smaller number of components capable of performing the functions described herein. Wireless devices such as smartphones may have multiple microprocessors and microcontrollers. A microprocessor may have a bus to communicate with memory on separate chips and buses to communicate with the rest of the equipment. Alternatively or additionally, the wireless device 300 may include a System On a Chip (SoC).

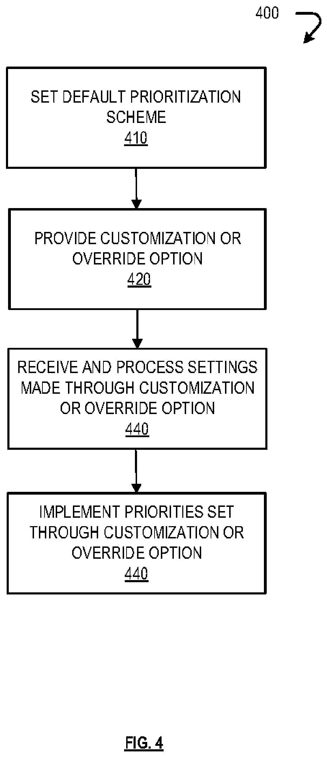

The memory 334 may store, for example, default prioritization settings 360 and a QoE prioritization mobile application 370. When executed by the processor 332, the QoE prioritization mobile application 370 interacts with the default prioritization settings 360 to perform the method described below with reference to FIGs 4- 6. In the illustrated embodiment, the default prioritization settings 360 are located within the wireless device 300. However, in additional embodiments, the default prioritization settings are disposed within an access node 110 additionally or alternatively and further may be stored in other locations within the network. For example, the default prioritization settings 360 may be disposed within an access node, a separate processing node, or elsewhere in the network.

Thus, in embodiments provided herein, the QoE prioritization application 370 and the OUI operates in conjunction with the processor 332 to perform a method to adjust default prioritization settings 360 for ensuring sufficient user QoE for wireless devices such as the wireless device 300. In order to ensure optimized QoE, the QoE prioritization mobile application 370 receives user input to create a customized prioritization scheme, which may override default prioritization settings when such settings are present.

The wireless communication circuitry 340 may include circuit elements configured to generate wireless signals (e.g., one or more antennas) as well as interface elements configured, for example, to translate control signals from the CPU 330 into data signals for wireless output. Further, the wireless communication circuitry 340 may include multiple elements, for example to communicate in different modes with different RATs. The CPU 330 may be configured to receive, interpret, and/or respond to signals received via the wireless communication circuitry 340. The CPU 330 may be configured to receive a network command (*e.g.*, from an access node 110) to perform other specified functions. The user interface components 320 may be or include any components enabling a user to interact with the wireless device 300, including tools for managing the QoE prioritization application 370 and Wi-Fi settings of the wireless device 300.

Thus, the wireless device 300 includes the processor 310 executing QoE prioritization application 370 to provide a user interface allowing configuration of prioritization settings. The processor 310 executes the QoE mobile application 370 to prioritize services, applications, and/or devices in accordance with the prioritization settings received through the user interface of the wireless device 300. In some embodiments, a user interface displayed through processing of the QoE mobile application 370 allows overriding of default prioritization settings, which may be provided by a network operator or a wireless device manufacturer.

FIG. 4 illustrates an exemplary method 400 for providing customization options for user controlled QoE. Method 400 may be performed by any suitable processor discussed herein, for example, a processor included in access node 110 or the processor 210 included in the QoE prioritization system 200. For discussion purposes, as an example, method 400 is described as being performed by the processor 210 included in the QoE prioritization system 200.

Method 400 starts in step 410, in which the processor 210 sets a default prioritization scheme including multiple prioritization settings. For example, the processor 210 may provide voice applications with highest priority, gaming applications with a next highest priority, followed by video and ultimately giving web surfing, email applications, and file transfer a lowest priority. Further, the default settings may be different for different times of day and also for different locations. The default prioritization settings may further include setting a default prioritization scheme for devices controlled by the wireless device and providing the override option to allow prioritization of the controlled devices, e.g., IoT devices. The above is merely an example, as any configuration can be set by default.

The method continues in step 420, in which the processor 210 provides one or more customization options. As set forth above, the one or more customization options may be offered through a QoE prioritization mobile application or alternatively through a service provider website. The offering of the one or more customization options may include provision of a user interface that includes multiple categories of applications, services and devices for prioritization. The user interface allows prioritization of these applications, services and devices by both time and location. The applications and services may include, for example, gaming applications, online meetings, streaming video, augmented reality (AR), virtual reality (VR), messaging applications, file transfer applications, or voice calls. The devices may include, for example, IoT devices or eMBB devices, Multiple IoT and eMBB devices may be prioritized by a single wireless device. For example, within a household, IoT devices may include security cameras and other appliances, and eMBB devices may include wireless phones for multiple individuals and multiple purposes. As a prioritization example, the user interface may allow an IoT device, such as a security camera to have a highest priority between 8PM and 6AM. As another example, the user interface may allow the user to set a Webex application for meetings to have a highest priority between 9AM and 5PM at a home location. Simultaneously, the user interface may allow the user to set gaming applications to have a lowest priority between 9AM and 5PM at the home location. Further, the user interface may allow the user to set voice calls to have a highest priority between 9AM and 5PM at a work location and to set gaming applications or video streaming to have a highest priority between 6PM and 9PM at a home location.

In step 430, the processor 210 receives and processes the settings made through the customization interface, which may include an override of a default prioritization scheme when the default prioritization scheme is present. For example, the processing may be interactive and require user confirmation. Further, conflicting settings may be resolved.

In step 440, the processor 210 implements the priorities set through the one or more customization options. For example, the processor 210 may trigger operation of network components, such as the access node 110 or the ISP 104 to operate in accordance with the customized priorities.

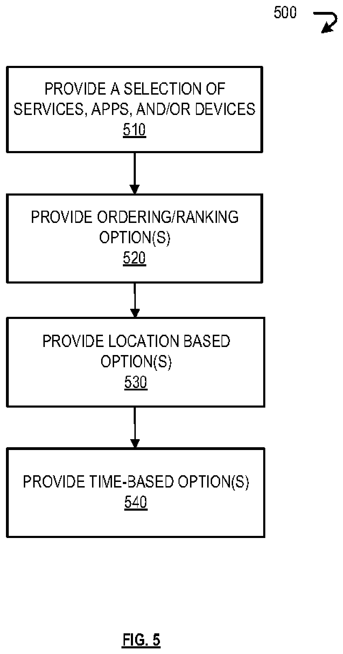

FIG. 5 depicts an exemplary method 500 for providing a user interface for QoE customization in accordance with embodiments described herein. Method 500 may be performed by any suitable processor discussed herein, for example, a processor included in access node 110, the processor 210 in the QoE prioritization system 200, or the processor 310 of the wireless device 300. Further, the method may be performed by utilizing a combination of these processors. For discussion purposes, as an example, method 500 is described as being performed by the processor 310 included in the wireless device 300.

In step 510, the processor 310 provides one or more options for a selection of services, applications, and/or devices through a user interface (e.g., a wireless device interface). As set forth above, the services and applications may include, for example gaming applications, online meetings, streaming video, augmented reality (AR), virtual reality (VR), messaging applications, file transfer applications, or voice calls. The devices may include, for example, IoT devices or eMBB devices. Multiple IoT and eMBB devices may be prioritized by a single wireless device. For example, within a household, IoT devices may include security cameras and other appliances, and eMBB devices may include wireless phones for multiple individuals and multiple purposes.

In step 520, the processor 310 provides one or more options for ordering and/or ranking options for the applications, services, and devices through the user interface. The options may allow arrangement in the order of priority. Alternatively, the interface may allow matching of services, application, or devices with a level of service. The levels of service may include, for example, different quality class identifiers (QCI) or 5G quality of service identifiers (5QI). Existing QCIs and 5QIs include 1-9. QCIs and 5QIs are generally allocated by network service providers by default. For example, guaranteed bit rate (GBR) traffic is often assigned to 5QIs or QCIs 1-4 and non-GBR traffic is therefore assigned to 5QIs or QCIs 5-9. GBR traffic includes, for example voice calls, video calls, live gaming, and video streaming. Non-GBR traffic includes, for example, file transfer applications and buffered video. QCI and 5QI values are based on requirements including latency, packet loss, and reliability. In embodiments provided herein, in order to override these default settings described above (which are merely exemplary), users may select from available 5QIs or QCIs for each application, service, or wireless device.

In step 530, the processor 310 provides a location based prioritization option through the user interface. As set forth above, the wireless device user may require different prioritization while traveling, while at work, or while at home. Accordingly, the interface may allow for assignment of different priorities or different QCIs or 5QIs based on multiple locations.

In step 540, the user interface further provides one or more time based options, which includes a scheduling option allowing time-based scheduling of prioritization through the user interface. The wireless device user may prioritize different applications, services, or devices at different times of day, days of the week, or times of year. For example, different priorities may be set during work hours and non-working hours. Thus, weekends and nights would have different priorities than daytime hours. Further, different times of year may require different priorities. For example, summer, winter, spring, and fall may require different priorities due to different daylight hours and different temperatures. Thus, IoT thermostats may be prioritized in summer and winter, but not prioritized or receiving a lower priority in spring and fall.

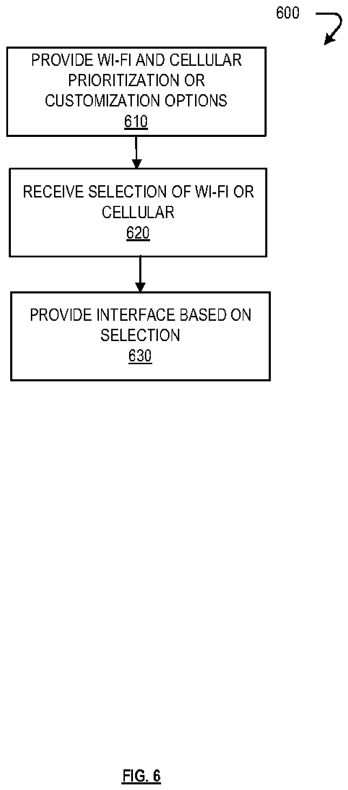

FIG. 6 illustrates a method 600 for providing QoE prioritization or customization options in accordance with embodiments described herein. Method 600 may be performed by any suitable processor discussed herein, for example, a processor included in access node 110, the processor 210 included in the QoE prioritization system 200, or the processor 310 included in the wireless device 300. Alternatively or additionally, the method may be performed by a combination of processors. For discussion purposes, as an example, method 600 is described as being performed by the processor 310.

In step 610, the processor 310 provides Wi-Fi and cellular prioritization or customization options. In response to the provision of Wi-Fi or cellular options in step 610, the processor 310 receives a selection in step 620. Based on the selection of Wi-Fi or cellular in step 620, the processor 310 provides an appropriate interface in step 630. The appropriate interface in step 630 provides different prioritization options depending on the selection of Wi-Fi or cellular. For example, on the Wi-Fi prioritization interface, selection of WMM, uplink QoS, or L4S may be enabled for each application, service, or device. For the cellular prioritization interface, wireless device users may be able to select 5QI, L4S or allot a network slice to particular service, application or device for prioritization. allowing prioritization of gaming, online meetings, streaming video, augmented reality (AR), virtual reality (VR), messaging applications, file transfer applications, or voice calls. In embodiments provided herein, the Wi-Fi customization option includes prioritization based on selection of Wi-Fi multimedia (WMM), uplink quality of service (QOS), and low latency, low loss, and/or scalable throughput (L4S). The cellular customization option includes prioritization based on 5G quality of service (QoS) Identifier (5QI), low latency, low loss, and scalable throughput (L4S), and/or on-demand network slicing.

In some embodiments, methods 400, 500, and 600 may include additional steps or operations. Furthermore, the methods may include steps shown in each of the other methods. Additionally, the order of steps shown is merely exemplary and the steps may be re-ordered as appropriate. As one of ordinary skill in the art would understand, the methods 400, 500, and 600 may be integrated in any useful manner.

The steps of the methods described above can be combined or rearranged in any meaningful manner. Further, the exemplary systems and methods described herein can be performed under the control of a processing system executing computer-readable codes embodied on a computer-readable recording medium or communication signals transmitted through a transitory medium. The computer-readable recording medium is any data storage device that can store data readable by a processing system, and includes both volatile and nonvolatile media, removable and non-removable media, and contemplates media readable by a database, a computer, and various other network devices.

Illustrative examples of systems, methods and computer products described herein are provided below. An embodiment of a system, method and/or computer product described herein may include any one or more, and any combination of, the aspects/embodiments/features described below in any order and/or in any combination:
Clause 1. A method comprising: setting a default prioritization scheme for applications or services utilized by multiple wireless devices in a wireless network; providing one or more customization options allowing overriding of the default prioritization scheme, the one or more customization options available through a device interface; and overriding the default prioritization scheme and providing a customized prioritization scheme for a wireless device based on manipulation of the one or more customization options through the device interface.
Clause 2. The method of any preceding clause, further comprising setting the default prioritization scheme for devices controlled by the wireless device and providing the one or more customization options to allow prioritization of the controlled devices.
Clause 3. The method of any preceding clause, further comprising providing a scheduling option allowing time-based scheduling of prioritization through the wireless device interface.
Clause 4. The method of any preceding clause, further comprising providing a location based prioritization option through the device interface.
Clause 5. The method of any preceding clause, further comprising allowing prioritization of gaming, online meetings, streaming video, augmented reality (AR), virtual reality (VR), messaging applications, file transfer applications, or voice calls.
Clause 6. The method of any preceding clause, further comprising implementing a network service provider application to provide the one or more customization options.
Clause 7. The method any preceding clause, further comprising utilizing a network service provider website to provide the one or more customization options.
Clause 8. The method of any preceding clause, wherein the one or more customization options include both W-Fi and cellular override options.
Clause 9. The method of clause 8, wherein the Wi-Fi override option includes prioritization based on selection of Wi-Fi multimedia (WMM), uplink quality of service (QOS), and low latency, low loss, and scalable throughput (L4S).
Clause 10. The method of clause 8, wherein the cellular override option includes prioritization based on 5G quality of service (QoS) Identifier (5QI), low latency, low loss, and scalable throughput (L4S), or on-demand network slicing.
Clause 11. A system comprising: at least one memory storing instructions and data including a default prioritization scheme for applications and services utilized by multiple wireless devices in a wireless network; at least one processor executing the instructions to perform operations including; providing a customization option allowing manipulation of the default prioritization scheme, the customization option available through a wireless device interface; and adjusting the default prioritization scheme to provide a customized prioritization scheme for a wireless device based on manipulation of the customization option through the wireless device interface.
Clause 12. The system of clause 11, the operations further comprising providing the default prioritization scheme for devices controlled by the wireless device and providing the customization option to allow prioritization of the controlled devices.
Clause 13. The system of clause 11 or 12, the operations further comprising providing a scheduling option allowing time-based scheduling of prioritization through the wireless device interface.
Clause 14. The system of any of clauses 11 to 13, the operations further comprising providing a location based prioritization option through the wireless device interface.
Clause 15. The system of any of clauses 11 to 14, the operations further comprising implementing a network service provider application to provide the customization option.
Clause 16. The system of any of clauses 11 to 15, the operations further comprising utilizing a network service provider website to provide the customization option.
Clause 17. The system of any of clauses 11 to 16, wherein the customization option includes both Wi-Fi and cellular customization options.
Clause 18. A wireless device, comprising: at least one processor executing services and applications in accordance with a customized prioritization scheme; and a user interface allowing configuration of the customized prioritization scheme, the user interface available on the wireless device, the processor determining priorities of the services and applications in accordance with the customized prioritization scheme through the user interface of the wireless device.
Clause 19. The wireless device of clause 18, wherein the user interface allows overriding of a default prioritization scheme.
Clause 20. The wireless device of clause 19, wherein the default prioritization scheme is a network-provided default prioritization scheme.

Examples of the computer-readable recording medium include, but are not limited to, read-only memory (ROM), random-access memory (RAM), erasable electrically programmable ROM (EEPROM), flash memory or other memory technology, holographic media or other optical disc storage, magnetic storage including magnetic tape and magnetic disk, and solid state storage devices. The computer-readable recording medium can also be distributed over network-coupled computer systems so that the computer-readable code is stored and executed in a distributed fashion. The communication signals transmitted through a transitory medium may include, for example, modulated signals transmitted through wired or wireless transmission paths.

The above description and associated figures teach the best mode of the invention. The following claims specify the scope of the invention. Note that some aspects of the best mode may not fall within the scope of the invention as specified by the claims. Those skilled in the art will appreciate that the features described above can be combined in various ways to form multiple variations of the invention. As a result, the invention is not limited to the specific embodiments described above, but only by the following claims and their equivalents.

## Claims

1. A method comprising:
setting a default prioritization scheme for applications or services utilized by multiple wireless devices in a wireless network;
providing one or more customization options allowing overriding of the default prioritization scheme, the one or more customization options available through a device interface; and
overriding the default prioritization scheme and providing a customized prioritization scheme for a wireless device based on manipulation of the one or more customization options through the device interface.

2. The method of claim 1, further comprising setting the default prioritization scheme for devices controlled by the wireless device and providing the one or more customization options to allow prioritization of the controlled devices.

3. The method of claim 1 or 2, further comprising providing a scheduling option allowing time-based scheduling of prioritization through the wireless device interface.

4. The method of any of claims 1 to 3, further comprising providing a location based prioritization option through the device interface.

5. The method of any of claims 1 to 4, further comprising allowing prioritization of gaming, online meetings, streaming video, augmented reality, AR, virtual reality, VR, messaging applications, file transfer applications, or voice calls.

6. The method of any of claims 1 to 5, further comprising:
implementing a network service provider application to provide the one or more customization options; and/or
utilizing a network service provider website to provide the one or more customization options.

7. The method of any of claims 1 to 6, wherein the one or more customization options include both Wi-Fi and cellular override options, wherein:
the Wi-Fi override option includes prioritization based on selection of Wi-Fi multimedia, WMM, uplink quality of service, QOS, and low latency, low loss, and scalable throughput, L4S; and
the cellular override option includes prioritization based on 5G quality of service, QoS, Identifier, 5QI, low latency, low loss, and scalable throughput, L4S, or on-demand network slicing.

8. A system comprising:
at least one memory storing instructions and data including a default prioritization scheme for applications and services utilized by multiple wireless devices in a wireless network;
at least one processor executing the instructions to perform operations including;
providing a customization option allowing manipulation of the default prioritization scheme, the customization option available through a wireless device interface; and
adjusting the default prioritization scheme to provide a customized prioritization scheme for a wireless device based on manipulation of the customization option through the wireless device interface.

9. The system of claim 8, the operations further comprising providing the default prioritization scheme for devices controlled by the wireless device and providing the customization option to allow prioritization of the controlled devices.

10. The system of claim 8 or 9, the operations further comprising providing a scheduling option allowing time-based scheduling of prioritization through the wireless device interface.

11. The system of any of claims 8 to 10, the operations further comprising providing a location based prioritization option through the wireless device interface.

12. The system of any of claims 8 to 11, the operations further comprising:
implementing a network service provider application to provide the customization option; and/or
utilizing a network service provider website to provide the customization option.

13. The system of any of claims 8 to 12, wherein the customization option includes both W-Fi and cellular customization options, wherein:
the Wi-Fi override option includes prioritization based on selection of Wi-Fi multimedia, WMM, uplink quality of service, QOS, and low latency, low loss, and scalable throughput, L4S; and
the cellular override option includes prioritization based on 5G quality of service, QoS, Identifier, 5QI, low latency, low loss, and scalable throughput, L4S, or on-demand network slicing.

14. A wireless device, comprising:
at least one processor executing services and applications in accordance with a customized prioritization scheme; and
a user interface allowing configuration of the customized prioritization scheme, the user interface available on the wireless device, the processor determining priorities of the services and applications in accordance with the customized prioritization scheme through the user interface of the wireless device.

15. The wireless device of claim 14, wherein the user interface allows overriding of a default prioritization scheme, and wherein the default prioritization scheme is a network-provided default prioritization scheme.
